# EUROPÄISCHE PATENTSCHRIFT

(11) **EP 1 243 552 B1**
(45) Veröffentlichungstag und Bekanntmachung des Hinweises auf die Patenterteilung: **02.07.2008**
(21) Anmeldenummer: 01107334.3
(22) Anmeldetag: 24.03.2001
(51) Int. Cl.: C01B 13/14, C01B 13/24, C01B 13/18, H01L 21/306, C09K 3/14

(54) **Mit einer Hülle umgebene, dotierte Oxidpartikeln**
Coated oxide particles comprising a dopant
Particules d'oxydes revetus contenant un dopant

(43) Veröffentlichungstag der Anmeldung: 25.09.2002
(73) Patentinhaber: Evonik Degussa GmbH, 40474 Düsseldorf (DE)
(72) Erfinder: Mangold, Helmut, Dr., 63517 Rodenbach (DE); Schumacher, Kai, Dr., 65189 Wiesbaden (DE)

(56) Entgegenhaltungen:
- EP-A- 0 088 905
- EP-A- 0 850 876
- EP-A- 0 995 718

## Beschreibung

Gegenstand der Erfindung sind Oxidpartikel mit einem Kern aus einem Metall- oder Metalloidoxid, einer im Kern verteilten Dotierkomponente und einer den Kern umgebenden Hülle.

Der anhaltende Trend zur Miniaturisierung in der Halbleiterindustrie führt zu immer höheren Anforderungen beim chemisch-mechanischen Polieren von Oxid- und Metallschichten. Ziel des Polierens ist ein rasches, präzises Abtragen der Oberfläche ohne Erzeugung von Kratzern, bei einer möglichst hohen Selektivität des Poliermittels gegenüber den unterschiedlichen Schichten, die zum Aufbau eines integrierten Schaltkreises benötigt werden.

Man versucht diesen höheren Anforderungen an das Poliermittel, zum Teil dadurch gerecht zu werden, dass man physikalische Mischungen von Polierpartikeln für eine Polieraufgabe einsetzt, um so die jeweiligen Vorteile der Mischungspartner zu vereinen. Nachteilig ist hierbei oft, dass für den Poliervorgang wichtige Parameter, wie z.B. die Teilchengrößen oder das Verhalten der Polierpartikel verschiedenen pH-Bereichen nicht zueinander passen. Dies führt dazu, dass keine stabilen Dispersionen zum chemisch-mechanischen Polieren erhalten werden können.

In chemischen Mischungen von Polierpartikeln liegen zwar einheitliche Teilchen vor, die Möglichkeiten der Kombination sind jedoch durch die bekannten Herstellprozesse und die Verfügbarkeit der Ausgangsmaterialien und der damit verbundenen Wirtschaftlichkeit der Prozesse eingeschränkt.

Ein Verfahren zur Herstellung solcher Mischoxide ist zum Beispiel in EP-A-1048617 beschrieben. In einem pyrogenen Verfahren führt man ein SiCl₄/AlCl₃-Gemisch in einer Knallgasflamme zusammen und erhält in einem Hydrolyseschritt ein Mischoxid aus Siliciumdioxid und Aluminiumoxid. Unter einheitlich ist zu verstehen, dass ein Mischoxidpartikel aus den beiden Molekülarten SiO₂ und Al₂O₃ besteht.

Die in DE-A-196 50 500 beschriebenen dotierten, pyrogenen Oxide erweitern die Palette von Abrasivpartikeln für das chemisch-mechanische Polieren. Die Dotierungskomponente, die im gesamten Partikel verteilt ist, ändert die Struktur und die Eigenschaften des jeweiligen Partikels und damit die Poliereigenschaften, wie Abtragsrate und Selektivität. Für Anwendungen beim chemisch-mechanischen Polieren dünnster Schichten ist jedoch die Polierselektivität nicht ausreichend.

Aufgabe der Erfindung ist es daher, für den jeweiligen Polierzweck maßgeschneiderte Mischoxidpartikel für das chemisch-mechanische Polieren von Halbleitersubstraten und von auf ihnen aufgebrachten Schichten bereitzustellen, deren Zusammensetzung in wirtschaftlich vernünftiger Weise über einen weiten Bereich variiert werden kann und die die Nachteile des beschriebenen Standes der Technik vermeiden.

Gegenstand der Erfindung sind Oxidpartikel mit einem Kern, einer im Kern verteilten Dotierkomponente und einer den Kern umgebenden Hülle, wobei
Kern, Dotierung und Hülle jeweils unterschiedliche chemische Zusammensetzung aufweisen und
der Kern ein Metall- oder Metalloidoxid ist, ausgewählt aus der Gruppe umfassend Aluminiumoxid, Titanoxid, Zirkonoxid, Siliciumoxid, Eisenoxid, Ceroxid, Zinnoxid, Zinkoxid, Germaniumoxid und Vanadiumoxid
die Dotierkomponente ein Metall oder ein Oxid eines Metalles oder Metalloides, jeweils in beliebiger Oxidationsstufe, aus den Periodensystem-Gruppen I, IA, IB, II, IIA, IIB, III, IIIA, IIIB, IV, IVA, IVB, VA, VB, VIA, VIB, VIIA oder VIII ist,
der Kern mit der im Kern vorliegenden Dotierkomponente mittels eines pyrogenen Prozesses erhalten wird,
die Hülle ein Metall oder ein Oxid eines Metalles oder Metalloides, jeweils in beliebiger Oxidationsstufe, aus den Periodensystem-Gruppen I, IA, IB, II, IIA, IIB, III, IIIA, IIIB, IV, IVA, IVB, VA, VB, VIA, VIB, VIIA oder VIII ist.

Der Kern kann in verschiedenen Modifikationen oder Mischungen von Modifikationen eines Oxides vorliegen. So kann Aluminiumoxid in amorpher oder kristalliner Form vorliegen, wobei die kristallinen Formen die alpha-, gamma-, delta-, theta- und kappa-Modifikationen, sowie das nach seinem Herstellungsprozess pyrogen genannte Aluminiumoxid und Mischungen der vorgenannten Aluminiumoxide umfasst. Siliciumdioxid kann ebenfalls in Form seines pyrogenen Oxides, oder in den bekannten Modifikationen von Siliciumdioxid vorliegen.

Die erfindungsgemäßen Oxidpartikel können als Dotierung bevorzugt ein Metall oder ein Oxid eines Metalles oder Metalloides, jeweils in beliebiger Oxidationsstufe aus den Periodensystem-Gruppen Gruppen I; IA; IB, umfassend Cu, Ag, Au; II, umfassend Be, Mg; IIA, enthaltend Ca, Sr, Ba, Ra; IIB umfassend Zn, Cd, Hg; III, umfassend B, Al; IIIA, umfassend Sc, Y, die Lanthanoide, die Actinoide; IIIB, umfassend Ga, In, Tl; IV; IVA; IVB, umfassend Ge, Sn, Pb; VA; VB, umfassend As, Sb, Bi; VIA; VIB; VIIA oder VIII enthalten.

Bevorzugt können dies die Metalle oder Metalloide Li, Na, K, Rb, Cs, Si, Ti, Zr, Hf, V, Nb, Ta, Cr, Mo, W, Se, Te, Mn, Tc, Re, Fe, Co, Ni, Ru, Rh, Pd, Os, Ir, Pt. Die dotierten Edelmetalle (Au, Ag, Re, Ru, Rh, Pd, Os, Ir, Pt) liegen in der Regel elementar vor oder weisen auch oxidische Oberflächenbereiche auf.

Besonders bevorzugt als Dotierung sind die Oxide der Metalle und Metalloide von K, Mg, Al, Si, Ti, V, Cr, Mn, Fe, Co, Ni, Cu, Sn, Zn, W, La, Ce und Zr.

Die Dotierung kann in weiten Grenzen, 1 ppm und 30 Gew.-%, bezogen auf den Kern, variiert werden. Bevorzugt ist ein Bereich zwischen 300 ppm und 10 Gew.%.

Die Hülle gemäß der Erfindung umfasst ein Metall oder ein Oxid eines Metalles oder Metalloides, jeweils in beliebiger Oxidationsstufe, aus den Periodensystem-Gruppen I; IA; IB, umfassend Cu, Ag, Au; II, umfassend Be, Mg; IIA, enthaltend Ca, Sr, Ba, Ra; IIB umfassend Zn, Cd, Hg; III, umfassend B, Al; IIIA, umfassend Sc, Y, die Lanthanoide, die Actinoide; IIIB, umfassend Ga, In, Tl; IV; IVA; IVB, umfassend Ge, Sn, Pb; VA; VB, umfassend As, Sb, Bi; VIA; VIB; VIIA oder VIII enthalten.

Bevorzugt können dies die Metalle oder Metalloide Li, Na, K, Rb, Cs, Si, Ti, Zr, Hf, V, Nb, Ta, Cr, Mo, W, Se, Te, Mn, Tc, Re, Fe, Co, Ni, Ru, Rh, Pd, Os, Ir, Pt. Die dotierten Edelmetalle (Au, Ag, Re, Ru, Rh, Pd, Os, Ir, Pt) liegen in der Regel elementar vor oder weisen auch oxidische Oberflächenbereiche auf.

Besonders bevorzugt als Hülle sind die Oxide von Cer, Zirkonium, Aluminium, Silicium, Titan, Eisen, Zinn, Zink, Germanium und Vanadium.

Die Hüllenoxide können dabei in amorpher und/oder kristalliner Form auf dem dotierten Kern vorliegen, und diesen ganz oder teilweise umhüllen.

Wie die Dotierungskomponente können auch die Hüllenoxide in weiten Grenzen, 10 ppm und 65 Gew.%, bezogen auf den dotierten Kern, variiert werden. Bevorzugt ist ein Bereich zwischen 5 und 40 Gew.%.

Die BET-Oberfläche des umhüllten und dotierten Metall- oder Metalloid-Oxides kann zwischen 5 und 1000 m²/g liegen, die durchschnittliche Primärpartikelgröße zwischen 1 nm und 1 µm.

Ein weiterer Gegenstand der Erfindung ist Verfahren zur Herstellung der Oxidpartikel bei dem
- zunächst die Dotierung des Kerns hergestellt wird, indem man in eine Flamme wie sie zur Herstellung von pyrogenen Oxiden benutzt wird, ein Aerosol einspeist, das als Dotierungskomponente eine Metall- oder Metalloidverbindung, gelöst oder in einer Lösung suspendiert, enthält, dieses Aerosol vor der Reaktion mit dem Gasgemisch der Flammenoxidation bzw. Flammenhydrolyse, welches einen Vorläufer des Kernes enthält, homogen mischt, das Aerosol-Gasgemisch in einer Flamme abreagieren lässt und den entstandenen dotierten Kern in bekannter Weise vom Gasstrom abtrennt,
- und anschließend die Beschichtung des dotierten Kerns durchführt, indem man zu einer wässrigen und/oder alkoholischen Dispersion, die 1-60 Gew.%, bezogen auf die Dispersion, eines im ersten Verfahrensschritt hergestellten dotierten Kernes enthält, eine Lösung oder Suspension gibt, die 0,001-75 Gew.%, bezogen auf den dotierten Kern, eines Metallsalz- oder Metalloidsalz enthält, das Reaktionsgemisch trocknet und gegebenenfalls calciniert oder
- man den dotierten Kern in einem geeigneten Mischgefäß unter intensivem Mischen, gegebenenfalls zunächst mit einer wässerigen Flüssigkeit und anschließend mit einer wässerigen Lösung oder Dispersion eines Metall- oder Metalloidsalzes besprüht, das Reaktionsgemisch gegebenenfalls nachmischt und bei einer Temperatur von 100 bis 900 □C über einen Zeitraum von 1 min bis 8 Stunden tempert.

Als Vorläufer des Kernes werden bevorzugt die Verbindungen der Metalloide/Metalle Aluminium, Titan, Zirkon und Silicium eingesetzt, die unter den Reaktionsbedingungen in die Oxide überführt werden. Besonders bevorzugt sind Metallhalogenide wie zum Beispiel Aluminiumchlorid, Titantetrachlorid und Siliciumtetrachlorid.

Als Dotierkomponente können Metalle und/oder Metalloide und deren Verbindungen, soweit sie in einer flüssigen Lösung löslich oder suspendierbar sind, eingesetzt werden. Diese werden unter den Reaktionsbedingungen in die Oxide überführt. Die Edelmetalle (Au, Ag, Re, Ru, Rh, Pd, Os, Ir, Pt) liegen in der Regel elementar vor oder weisen auch oxidische Oberflächenbereiche auf. Bevorzugt als Dotierverbindungen sind Salze der Metall- und Metalloidverbindungen der Periodensystemgruppen I, vorzugsweise Li, Na, IA, vorzugsweise K, Rb, Cs, IB, enthaltend Cu, Ag, Au, II, enthaltend Be, Mg, IIA, enthaltend Ca, Sr, Ba, Ra, IIB, enthaltend Zn, Cd, Hg, III, enthaltend B, Al, IIIA, enthaltend Sc, Y, die Lanthanoide, die Actinoide, IIIB, enthaltend Ga, In, Tl, IV, vorzugsweise Si, IVA, vorzugsweise Ti, Zr, Hf, IVB, enthaltend Ge, Sn, Pb, VA, vorzugsweise V, Nb, Ta, VB, enthaltend As, Sb, Bi, VIA, vorzugsweise Cr, Mo, W, VIB, vorzugsweise Se, Te, VIIA, vorzugsweise Mn, Tc, Re, VIII, vorzugsweise Fe, Co, Ni, Ru, Rh, Pd, Os, Ir, Pt, jeweils in den verschiedenen Oxidationsstufen.

Besonders bevorzugt als Dotierverbindungen können Metall- oder Metalloidsalze von K, Mg, Al, Si, Ti, V, Cr, Ce, Mn, Fe, Co, Ni, Cu, Zn, Sn, W, La, Y, Zr in den verschiedenen Oxidationsstufen sein.

Bevorzugt als Verbindungen zur Herstellung der Hülle sind Salze der Metall- und Metalloidverbindungen der Periodensystemgruppen I, vorzugsweise Li, Na, IA, vorzugsweise K, Rb, Cs, IB, enthaltend Cu, Ag, Au, II, enthaltend Be, Mg, IIA, enthaltend Ca, Sr, Ba, Ra, IIB, enthaltend Zn, Cd, Hg, III, enthaltend B, Al, IIIA, enthaltend Sc, Y, die Lanthanoide, die Actinoide, IIIB, enthaltend Ga, In, Tl, IV, vorzugsweise Si, IVA, vorzugsweise Ti, Zr, Hf, IVB, enthaltend Ge, Sn, Pb, VA, vorzugsweise V, Nb, Ta, VB, enthaltend As, Sb, Bi, VIA, vorzugsweise Cr, Mo, W, VIB, vorzugsweise Se, Te, VIIA, vorzugsweise Mn, Tc, Re, VIII, vorzugsweise Fe, Co, Ni, Ru, Rh, Pd, Os, Ir, Pt, jeweils in den verschiedenen Oxidationsstufen. Die Edelmetalle (Au, Ag, Re, Ru, Rh, Pd, Os, Ir, Pt) liegen in der Regel elementar vor oder weisen auch oxidische Oberflächenbereiche auf.

Die erfindungsgemäß umhüllten, dotierten Oxidpartikel finden Verwendung als Poliermittel beim chemisch-mechanischen Polieren von Halbleitersubstraten und von auf ihnen aufgebrachten Schichten.

Durch die Erfindung ist es möglich, den durch die Dotierung veränderten Kern der Abrasivpartikel durch eine weitere Komponente, die sich auf der Oberfläche des dotierten Partikels befindet, und damit beim Polieren vollständig zur Verfügung steht, zu ergänzen. Durch die Vielfalt der Kombinationsmöglichkeiten bei einfacher Herstellung gelingt es so, eines auf die jeweilige Polieraufgabe maßgeschneidertes Partikel zu erhalten.

Weiterhin können sie Verwendung finden als Füllstoff, zur Einstellung der Rheologie von flüssigen Systemen, als Trägermaterial, als katalytisch aktive Substanz, als Ausgangsmaterial zur Herstellung von Dispersionen, als keramischen Grundstoff, in der Elektronikindustrie, in der Kosmetikindustrie, als Absorbermaterial, als Additiv in der Silikon- und Kautschukindustrie, zur HitzeschutzStabilisierung, als Wärmedämmmaterial, als Fließhilfsmittel, als Füllstoff in der Dentalindustrie, als Hilfsstoff in der pharmazeutischen Industrie, in der Lackindustrie, bei PET-Film-Anwendungen, in Tonerpulvern, als Rostschutzmittel, in Tinten, in Batterieseparatoren.

### Beispiele

Die Beispiele A beschreiben die Dotierung von Siliciumdioxid, die Beispiele B beschreiben das Coaten von dotierten Siliciumdioxiden mit Ceroxid. Analytische Werte der Proben finden sich in der Tabelle.

### Beispiel A-1: Aluminiumoxid dotiertes Siliciumdioxid

Es werden 5,25 kg/h SiCl₄ bei ca. 130 °C verdampft und in das Zentralrohr des Brenners überführt. In das Zentralrohr werden zusätzlich 3,47 Nm³/h (Primär-Wasserstoff) und 3,76 Nm³/h Luft eingespeist. Das Gasgemisch strömt aus der inneren Düse des Brenners und brennt in den Brennerraum und das daran anschließende wassergekühlte Flammrohr. In die die Zentraldüse umgebende Manteldüse werden zur Vermeidung von Anbackungen an den Düsen 0,5 Nm³/h (Mantel oder Sekundär-)Wasserstoff eingespeist. In den Brennerraum werden noch zusätzlich 20 Nm³/h (Sekundär-Luft eingespeist.

Aus dem Axialrohr strömt die zweite Gaskomponente in das Zentralrohr. Der zweite Gasstrom besteht aus einem mit einem Aluminiumsalz beladenen Aerosol. Dieses Aluminiumsalz -Aerosol wird durch Vernebelung aus einer 2,3 % wässrigen Aluminium(III)-Chlorid-Lösung im Aerosol-Generator erzeugt. Es werden 460 g/h Aluminiumsalz -Lösung vernebelt. Diese vernebelte Aluminiumsalz -Lösung wird mit Hilfe eines Traggases von 0,5 Nm3/h Luft durch beheizte Leitungen geführt, wobei der Salzdampfnebel bei Temperaturen um ca. 180 °C in Gas und Salzkristall-Aerosol übergeht. Am Brennermund wird die Temperatur des Gasgemisches (SiCl₄-Luft-Wasserstoff, Aerosol) gemessen; sie beträgt 180 °C.

Nach der Flammenhydrolyse werden die Reaktionsgase und die entstandene mit Aluminium dotierte pyrogene Kieselsäure durch Anlegen eines Unterdruckes durch ein Kühlsystem gesaugt und dabei der Partikel-Gasstrom auf ca. 100 bis 160°C abgekühlt. In einem Filter oder Zyklon wird der Feststoff von dem Abgasstrom abgetrennt.

Der Aluminiumoxid dotierte Siliciumdioxid fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt

### Beispiel A-2: Manganoxid-dotiertes Siliciumdioxid

Es werden 3,25 kg/h SiCl₄ bei ca. 130 °C verdampft und in das Zentralrohr des Brenners von Beispiel 1 überführt. In das Zentralrohr werden zusätzlich 3,25 Nm³/h (Primär-Wasserstoff) und 5,0 Nm³/h Luft eingespeist. Das Gasgemisch strömt aus der inneren Düse des Brenners und brennt in den Brennerraum und das daran anschließende wassergekühlte Flammrohr.

In die die Zentraldüse umgebende Manteldüse werden zur Vermeidung von Anbackungen an den Düsen 0,3 Nm³/h (Mantel oder Sekundär-)Wasserstoff eingespeist. Aus dem Axialrohr strömt die zweite Gaskomponente in das Zentralrohr. Der zweite Gasstrom besteht aus einem mit einem Mangansalz beladenen Aerosol. Dieses Mangansalz-Aerosol wird durch Vernebelung aus einer 20 % wässrigen Mangan(II)-Chlorid-Lösung im Aerosol-Generator erzeugt. Es werden 225 g/h Mangansalz -Lösung vernebelt. Diese vernebelte Mangansalz - Lösung wird mit Hilfe eines Traggases von 0,5 Nm³/h Luft durch beheizte Leitungen geführt, wobei der Salzdampfnebel bei Temperaturen um ca. 180 °C in Gas und Salzkristall-Aerosol übergeht. Am Brennermund wird die Temperatur des Gasgemisches (SiCl₄-Luft-Wasserstoff, Aerosol) gemessen; sie beträgt 180 °C. Nach der Flammenhydrolyse werden die Reaktionsgase und die entstandene mit Mangan dotierte pyrogene Kieselsäure durch Anlegen eines Unterdruckes durch ein Kühlsystem gesaugt und dabei der Partikel-Gasstrom auf ca. 100 bis 160 °C abgekühlt. In einem Filter oder Zyklon wird der Feststoff von dem Abgasstrom abgetrennt. Das Manganoxid-dotierte Siliciumdioxid fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt.

### Beispiel B-1 :

300 g mit MnO₂ dotierte pyrogene Kieselsäure werden in einer Lösung aus 250 g Cernitrat (Ce(NO₃)₃) in 10 l Wasser dispergiert. Das Wasser wird bei 90°C eintrocknen lassen. Anschließend erfolgt eine Temperaturbehandlung bei 500°C für 3 h.

### Beispiel B-2 :

300 g mit MnO₂ dotierte pyrogene Kieselsäure werden in einer Lösung aus 500 g Cernitrat (Ce(NO₃)₃) in 10 l Wasser dispergiert. Das Wasser wird bei 90°C eintrocknen lassen. Anschließend erfolgt eine Temperaturbehandlung bei 500°C für 3 h.

### Beispiel B-3:

300 g mit MnO₂ dotierte pyrogene Kieselsäure werden in einer Lösung aus 1,2 kg Cernitrat (Ce(NO₃)₃) in 10 l Wasser dispergiert. Das Wasser wird bei 90°C eintrocknen lassen. Anschließend erfolgt eine Temperaturbehandlung bei 500°C für 3 h.

### Beispiel B-4 :

300 g mit Al₂O₃ dotierte pyrogene Kieselsäure werden in einer Lösung aus 250 g Cerchlorid (CeCl₃) in 10 l Wasser dispergiert. Das Wasser wird bei 90°C eintrocknen lassen.

Anschließend erfolgt eine Temperaturbehandlung bei 500°C für 3 h.

### Beispiel B-5:

300 g mit Al₂O₃ dotierte pyrogene Kieselsäure werden in einer Lösung aus 250 g Ceracetat(Ce(O₂C₂H₃)₂) in 10 l Wasser dispergiert. Das Wasser wird bei 90°C eintrocknen lassen. Anschließend erfolgt eine Temperaturbehandlung bei 500°C für 3 h.

### Beispiel B-6 :

300 g mit MnO₂ dotierte pyrogene Kieselsäure werden in einer Lösung aus 250 g Cernitrat (Ce(NO₃)₃) in 10 l Wasser dispergiert. Das Wasser wird bei 90°C eintrocknen lassen. Anschließend erfolgt eine Temperaturbehandlung bei 300°C für 3 h.

### Beispiel B-7 :

300 g mit MnO₂ dotierte pyrogene Kieselsäure werden in einer Lösung aus 250 g Cernitrat (Ce(NO₃)₃) in 10 l Wasser dispergiert. Das Wasser wird bei 90°C eintrocknen lassen. Anschließend erfolgt eine Temperaturbehandlung bei 400°C für 3 h.

### Beispiel B-8:

300 g mit MnO₂ dotierte pyrogene Kieselsäure werden in einer Lösung aus 250 g Cernitrat (Ce(NO₃)₃) in 10 l Wasser dispergiert. Das Wasser wird bei 90°C eintrocknen lassen. Anschließend erfolgt eine Temperaturbehandlung bei 600°C für 3 h.

### Beispiel B-9:

300 g mit MnO₂ dotierte pyrogene Kieselsäure werden in einer Lösung aus 250 g Cernitrat (Ce(NO₃)₃) in 2,5 l Wasser dispergiert. Das Wasser wird bei 90°C eintrocknen lassen.

Anschließend erfolgt eine Temperaturbehandlung bei 500°C für 3 h.

**Tabelle: Analytische Daten der nach Beispiel B-1 bis B-9 erhaltenen Proben**

| Probe | SiO₂ [Gew.%] | CeO₂ [Gew.%] | Dotierkomponente [Gew.%] | BET-Oberfläche [m²/g] | TV [Gew.%] | GV [Gew.%] |
|---|---|---|---|---|---|---|
| A-1 | 99,8 | 0 | 0,2 | 80 | 0,93 | 0,98 |
| A-2 | 99,0 | 0 | 1,0 | 81 | 1,10 | 1,01 |
| B-1 | 80 | 19,5 | 0,5 | 76 | 1,25 | 0,76 |
| B-2 | 53,8 | 45,7 | 0,5 | 76 | 1,05 | 1,18 |
| B-3 | 34,9 | 64,6 | 0,5 | 78 | 1,75 | 1,4 |
| B-4 | 78,1 | 21,6 | 0,3 | 73 | 1,03 | 1,21 |
| B-5 | 67,6 | 32,1 | 0,3 | 80 | 1,25 | 0,98 |
| B-6 | 80,3 | 19,2 | 0,5 | 81 | 1,36 | 1,01 |
| B-7 | 81 | 18,5 | 0,5 | 77 | 1,41 | 0,96 |
| B-8 | 79,8 | 19,7 | 0,5 | 78 | 1,12 | 1,11 |
| B-9 | 69,3 | 15,3 | 15,4 | 70 | 1,19 | 1,08 |

| | | | | | | |
|---|---|---|---|---|---|---|
| TV = Trocknungsverlust (2h bei 105°C, in Anlehnung an DIN/ISO 787/II, ASTM D 280, JIS K 5101/21); GV = Glühverlust (2h bei 1000°C, in Anlehnung an DIN 55921, ASTM D 1208, JIS K 5101/23, bezogen auf die bei 105°C 2h getrocknete Substanz) | | | | | | |

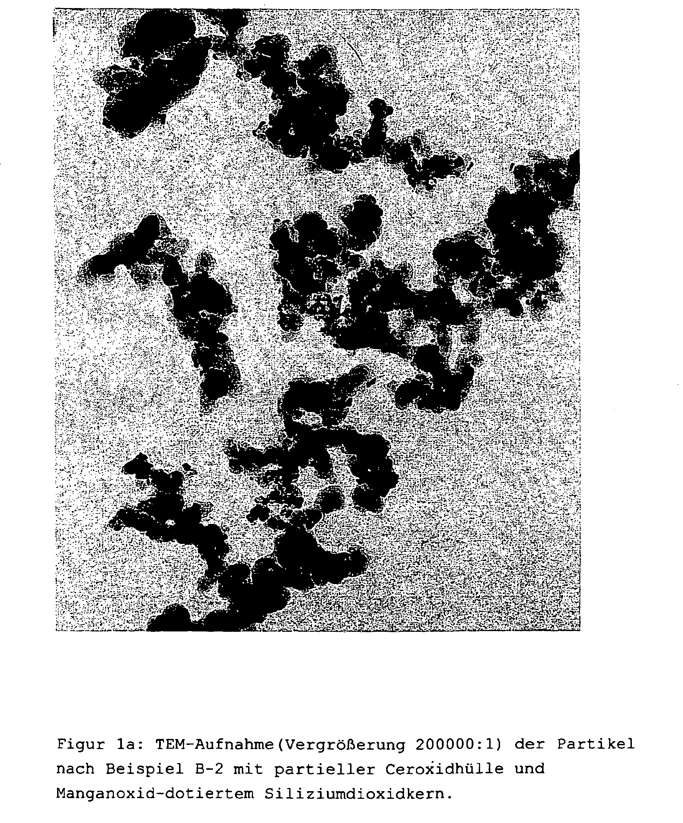

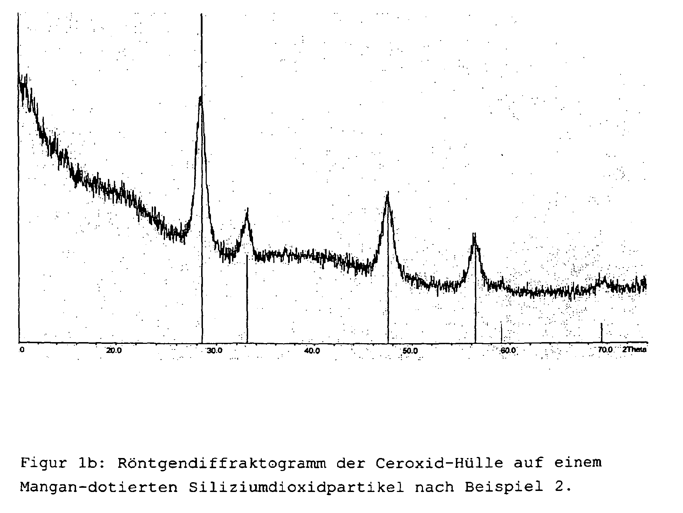

Figur 1a zeigt eine TEM-Aufnahme, Figur 1b das zugehörige Röntgendiffraktogramm des dotierten Ceroxides der nach Beispiel 1 hergestellten Partikel.

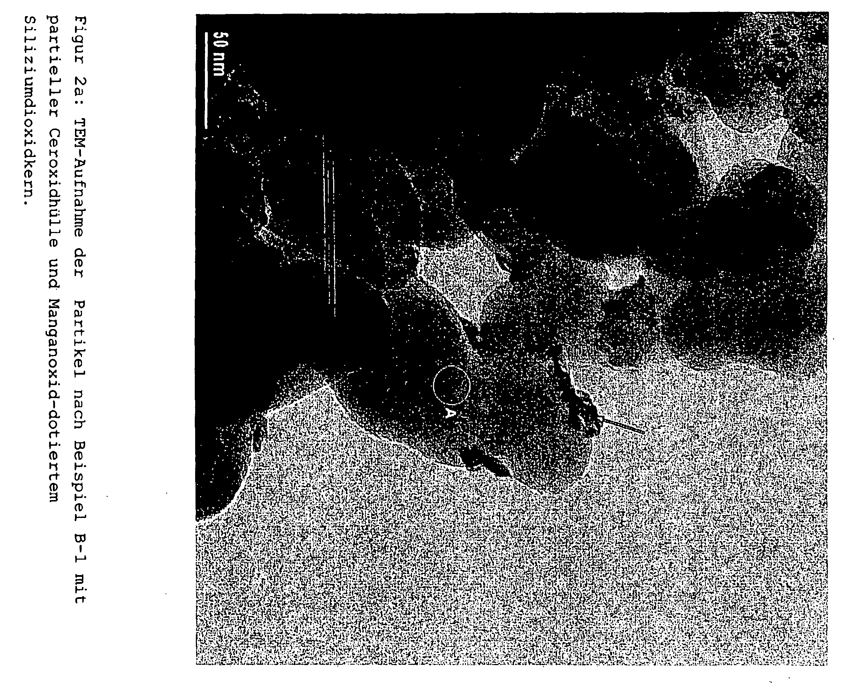

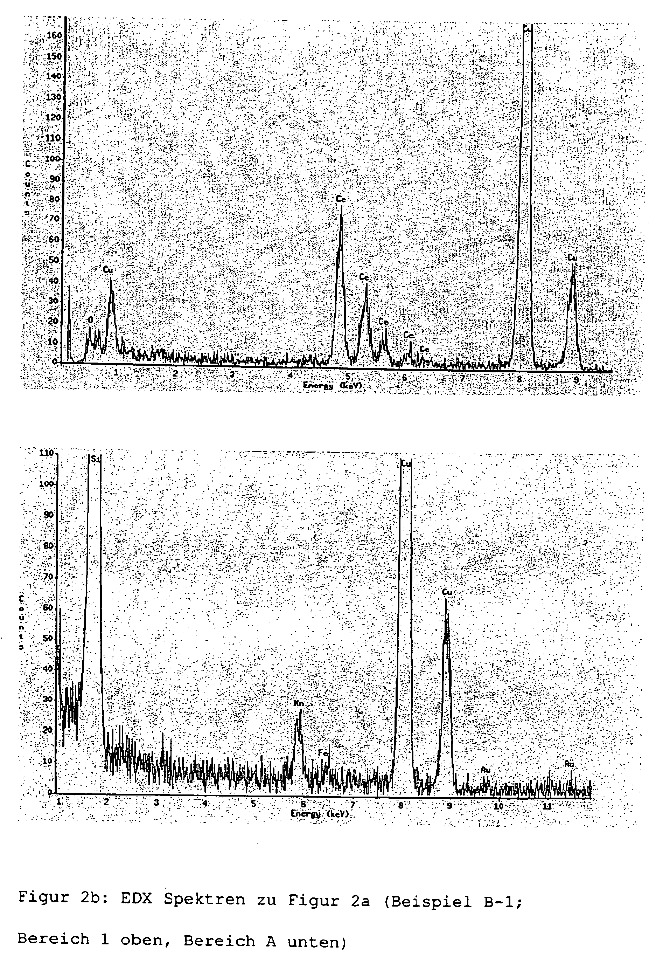

Figur 2a zeigt eine TEM-Aufnahme der Partikel aus Beispiel 1 mit den Bereichen A (Dotierung) und 1 (Coating). Deutlich ist Manganoxid (Dotierungskomponente, Bereich A) und Ceroxid (Coating) zu erkennen. Das EDX-Spektrum des Bereiches A (Figur 2b unten)zeigt Manganoxid als Dotierungskomponente, der Bereich 1 (Figur 2b oben) zeigt Ceroxid als Coatingkomponente.

## Patentansprüche

1. Oxidpartikel mit einem Kern, einer im Kern verteilten Dotierkomponente und einer den Kern umgebenden Hülle, wobei
Kern, Dotierung und Hülle jeweils unterschiedliche chemische Zusammensetzung aufweisen und
der Kern ein Metall- oder Metalloidoxid ist, ausgewählt aus der Gruppe umfassend Aluminiumoxid, Titanoxid, Zirkonoxid, Siliciumoxid, Eisenoxid, Ceroxid, Zinnoxid, Zinkoxid, Germaniumoxid und Vanadiumoxid
die Dotierkomponente ein Metall oder ein Oxid eines Metalles oder Metalloides, jeweils in beliebiger Oxidationsstufe, aus den Periodensystem-Gruppen I, IA, IB, II, IIA, IIB, III, IIIA, IIIB, IV, IVA, IVB, VA, VB, VIA, VIB, VIIA oder VIII ist,
der Kern mit der im Kern vorliegenden Dotierkomponente mittels eines pyrogenen Prozesses erhalten wird,
die Hülle ein Metall oder ein Oxid eines Metalles oder Metalloides, jeweils in beliebiger Oxidationsstufe, aus den Periodensystem-Gruppen I, IA, IB, II, IIA, IIB, III, IIIA, IIIB, IV, IVA, IVB, VA, VB, VIA, VIB, VIIA oder VIII ist.

2. Oxidpartikel nach Anspruch 1, **dadurch gekennzeichnet, dass** die Dotierung die Oxide der Metalle oder Metalloide von K, Mg, Al, Si, Ti, V, Cr, Mn, Fe, Co, Ni, Cu, Sn, Zn, W, La, Ce, Zr umfasst.

3. Oxidpartikel nach den Ansprüchen 1 oder 2, **dadurch gekennzeichnet, dass** der Anteil der Dotierung zwischen 1 ppm und 30 Gew.-% , bezogen auf den Kern, beträgt.

4. Oxidpartikel nach den Ansprüchen 1 bis 3 **dadurch gekennzeichnet, dass** die Hülle die Oxide von Cer, Zirkonium, Aluminium, Silicium, Titan, Eisen, Zinn, Zink, Germanium und Vanadium umfasst.

5. Oxidpartikel nach den Ansprüchen 1 bis 4, **dadurch gekennzeichnet, dass** die Hülle in amorpher und/oder kristalliner Form auf dem dotierten Kern vorliegt.

6. Oxidpartikel nach den Ansprüchen 1 bis 5, **dadurch gekennzeichnet, dass** die Hülle den dotierten Kern ganz oder teilweise umfasst.

7. Oxidpartikel nach den Ansprüchen 1 bis 6, **dadurch gekennzeichnet, dass** der Anteil der Hülle zwischen 10 ppm und 65 Gew.% , bezogen auf den dotierten Kern, beträgt.

8. Oxidpartikel nach den Ansprüchen 1 bis 7, **dadurch gekennzeichnet, dass** die BET-Oberfläche der dotierten, umhüllten Partikel zwischen 5 und 1000 m²/g liegt.

9. Oxidpartikel nach den Ansprüchen 1 bis 8, **dadurch gekennzeichnet, dass** die durchschnittliche Primärpartikelgröße der dotierten, umhüllten Partikel zwischen 1 nm und 1 µm liegt.

10. Verfahren zur Herstellung der Oxidpartikel gemäß den Ansprüchen 1 bis 9, **dadurch gekennzeichnet, dass**
- zunächst die Dotierung des Kerns hergestellt wird indem man in eine Flamme wie sie zur Herstellung von pyrogenen Oxiden benutzt wird, ein Aerosol einspeist, das als Dotierungskomponente eine Metall- oder Metalloidverbindung, gelöst oder in einer Lösung suspendiert, enthält, dieses Aerosol vor der Reaktion mit dem Gasgemisch der Flammenoxidation bzw. Flammenhydrolyse, welches einen Vorläufer des Kernes enthält, homogen mischt, das Aerosol-Gasgemisch in einer Flamme abreagieren lässt und den entstandenen dotierten Kern in bekannter Weise vom Gasstrom abtrennt
- und anschließend die Beschichtung des dotierten Kerns durchführt, indem man zu einer wässrigen und/oder alkoholischen Dispersion, die 1-60 Gew.%, bezogen auf die Dispersion, eines im ersten Verfahrensschritt hergestellten dotierten Kernes enthält, eine Lösung oder Suspension gibt, die 0,001-75 Gew.%, bezogen auf den dotierten Kern, eines Metallsalz- oder Metalloidsalz enthält, das Reaktionsgemisch trocknet und gegebenenfalls calciniert oder
- man den dotierten Kern in einem geeigneten Mischgefäß unter intensivem Mischen, gegebenenfalls zunächst mit einer wässerigen Flüssigkeit und anschließend mit einer wässerigen Lösung oder Dispersion eines Metall- oder Metalloidsalzes besprüht, das Reaktionsgemisch gegebenenfalls nachmischt und bei einer Temperatur von 100 bis 900 °C über einen Zeitraum von 1 min bis 8 Stunden tempert.

11. Verwendung der Oxidpartikel nach den Ansprüchen 1 bis 9 als Poliermittel beim chemisch-mechanischen Polieren von Halbleitersubstraten und von auf ihnen aufgebrachten Schichten.

12. Verwendung der Oxidpartikel nach Anspruch 1 bis 9 als Füllstoff, zur Einstellung der Rheologie von flüssigen Systemen, als Trägermaterial, als katalytisch aktive Substanz, als Ausgangsmaterial zur Herstellung von Dispersionen, als keramischen Grundstoff, in der Elektronikindustrie, in der Kosmetikindustrie, als Absorbermaterial, als Additiv in der Silikon- und Kautschukindustrie, zur Hitzeschutzstabilisierung, als Wärmedämmmaterial, als Fließhilfsmittel, als Füllstoff in der Dentalindustrie, als Hilfsstoff in der pharmazeutischen Industrie, in der Lackindustrie, bei PET-Film-Anwendungen, in Tonerpulvern, als Rostschutzmittel, in Tinten, in Batterieseparatoren.

## Claims

1. Oxide particles comprising a core, a doping component distributed in the core and a shell surrounding the core, wherein
the core, the doping component and the shell each have a different chemical composition and
the core is a metal oxide or metalloid oxide selected from the group consisting of aluminium oxide, titanium oxide, zirconium oxide, silicon oxide, iron oxide, cerium oxide, tin oxide, zinc oxide, germanium oxide and vanadium oxide
the doping component is a metal or an oxide of a metal or of a metalloid, each in any desired oxidation state, from the periodic table groups I, IA, IB, II, IIA, IIB, III, IIIA, IIIB, IV, IVA, IVB, VA, VB, VIA, VIB, VIIA or VIII,
the core with the doping component present in the core is obtained by means of a pyrogenic process,
the shell is a metal or an oxide of a metal or of a metalloid, each in any desired oxidation state, from the periodic table groups I, IA, IB, II, IIA, IIB, III, IIIA, IIIB, IV, IVA, IVB, VA, VB, VIA, VIB, VIIA or VIII.

2. Oxide particles according to Claim 1, **characterized in that** the doping component comprises the oxides of the metals or metalloids of K, Mg, Al, Si, Ti, V, Cr, Mn, Fe, Co, Ni, Cu, Sn, Zn, W, La, Ce, Zr.

3. Oxide particles according to Claims 1 or 2, **characterized in that** the proportion of the doping component is between 1 ppm and 30 wt.%, based on the core.

4. Oxide particles according to Claims 1 to 3, **characterized in that** the shell comprises the oxides of cerium, zirconium, aluminium, silicon, titanium, iron, tin, zinc, germanium and vanadium.

5. Oxide particles according to Claims 1 to 4, **characterized in that** the shell is present in amorphous and/or crystalline form on the doped core.

6. Oxide particles according to Claims 1 to 5, **characterized in that** the shell wholly or partly encloses the doped core.

7. Oxide particles according to Claims 1 to 6, **characterized in that** the proportion of the shell is between 10 ppm and 65 wt.%, based on the doped core.

8. Oxide particles according to Claims 1 to 7, **characterized in that** the BET surface area of the doped, enveloped particles is between 5 and 1000 m²/g.

9. Oxide particles according to Claims 1 to 8, **characterized in that** the average primary particle size of the doped, enveloped particles is between 1 nm and 1 µm.

10. Process for the preparation of the oxide particles according to Claims 1 to 9, **characterized in that**
- initially the doping component of the core is prepared by feeding an aerosol comprising a metal or metalloid compound, dissolved or solution suspended, as doping component into a flame as used for the preparation of fumed oxides, homogeneously mixing this aerosol before the reaction with the flame oxidation or hydrolysis gas mixture comprising a precursor of the core, allowing the aerosol-gas mixture to react in a flame and separating the resulting doped core from the gas stream in a known manner,
- and then the coating of the doped core is carried out by adding to an aqueous and/or alcoholic dispersion comprising 1-60 wt.%, based on the dispersion, of a doped core prepared in the first process step a solution or suspension comprising 0.001-75 wt.%, based on the doped core, of a metal salt or metalloid salt, drying the reaction mixture with or without calcination, or
- the doped core is sprayed in a suitable mixing vessel, with intensive mixing, optionally first with an aqueous liquid and then with an aqueous solution or dispersion of a metal or metalloid salt, the reaction mixture is subsequently mixed if appropriate and tempered at a temperature of 100 to 900°C for a period of 1 min to 8 hours.

11. Use of the oxide particles according to Claims 1 to 9 as a polishing agent in the chemical-mechanical polishing of semiconductor substrates and of layers applied to them.

12. Use of the oxide particles according to Claim 1 to 9 as a filler, for adjusting the rheology of liquid systems, as a carrier material, as a catalytically active substance, as a starting material for the preparation of dispersions, as a ceramic foundation stock, in the electronics industry, in the cosmetics industry, as an absorber material, as an additive in the silicone and rubber industry, for heat protection stabilization, as a thermal insulation material, as a flow auxiliary, as a filler in the dental industry, as an auxiliary in the pharmaceuticals industry, in the paint industry, in PET film uses, in toner powders, as a rustproofing agent, in inks, in battery separators.

## Revendications

1. Particule d'oxyde ayant un noyau, un composant de dopage réparti dans le noyau et une enveloppe entourant le noyau, dans laquelle :
le noyau, le composant de dopage et l'enveloppe présentent, respectivement, une composition chimique différente,
le noyau étant un oxyde de métal ou un oxyde de métalloïde, choisi dans le groupe comprenant l'oxyde d'aluminium, l'oxyde de titane, l'oxyde de zirconium, l'oxyde de silicium, l'oxyde de fer, l'oxyde de cérium, l'oxyde d'étain, l'oxyde de zinc, l'oxyde de germanium et l'oxyde de vanadium,
le composant de dopage étant un métal ou un oxyde d'un métal ou d'un métalloïde, respectivement, à un degré d'oxydation quelconque, choisi dans les groupes I, IA, IB, II, IIA, IIB, III, IIIA, IIIB, IV, IVA, IVB, VA, VB, VIA, VIB, VIIA ou VIII du système périodique,
le noyau, ainsi que le composant de dopage contenu dans ce dernier, étant obtenu par un procédé pyrogène,
l'enveloppe étant un métal ou un oxyde d'un métal ou d'un métalloïde, respectivement, à un degré d'oxydation quelconque, choisi parmi les groupes I, IA, IB, II, IIA, IIB, III, IIIA, IIIB, IV, IVA, IVB, VA, VB, VIA, VIB, VIIA ou VIII du système périodique.

2. Particule d'oxyde selon la revendication 1, **caractérisée en ce que** le composant de dopage comprend les oxydes des métaux ou des métalloïdes choisis parmi les éléments K, Mg, Al, Si, Ti, V, Cr, Mn, Fe, Co, Ni, Cu, Sn, Zn, W, La, Ce et Zr.

3. Particule d'oxyde selon la revendication 1 ou 2, **caractérisée en ce que** la proportion du composant de dopage se situe entre 1 ppm et 30 % en poids par rapport au noyau.

4. Particule d'oxyde selon les revendications 1 à 3, **caractérisée en ce que** l'enveloppe comprend les oxydes des éléments cérium, zirconium, aluminium, silicium, titane, fer, étain, zinc, germanium et vanadium.

5. Particule d'oxyde selon les revendications 1 à 4, **caractérisée en ce que** l'enveloppe se présente sous une forme amorphe et/ou cristalline autour du noyau dopé.

6. Particule d'oxyde selon les revendications 1 à 5, **caractérisée en ce que** l'enveloppe englobe totalement ou partiellement le noyau dopé.

7. Particule d'oxyde selon les revendications 1 à 6, **caractérisée en ce que** la proportion de l'enveloppe se situe entre 10 ppm et 65 % en poids par rapport au noyau dopé.

8. Particule d'oxyde selon les revendications 1 à 7, **caractérisée en ce que** la surface spécifique BET de la particule dopée et revêtue, se situe entre 5 et 1000 m²/g.

9. Particule d'oxyde selon les revendications 1 à 8, **caractérisée en ce que** la taille particulaire primaire moyenne de la particule revêtue et dopée, se situe entre 1 nm et 1 µm.

10. Procédé de fabrication de la particule d'oxyde selon les revendications 1 à 9, **caractérisé en ce que** :
- on réalise d'abord le dopage du noyau en injectant dans une flamme, telle qu'elle est utilisée pour la fabrication d'oxydes pyrogènes, un aérosol qui contient, comme composant de dopage, un composé de métal ou de métalloïde dissous ou mis en suspension dans une solution, en mélangeant ensuite cet aérosol jusqu'à homogénéité avant d'effectuer la réaction d'oxydation à la flamme ou d'hydrolyse à la flamme avec le mélange gazeux qui contient un précurseur du noyau, puis en laissant réagir le mélange gaz-aérosol dans une flamme et en séparant de manière connue le noyau dopé obtenu du courant gazeux.
- on procède ensuite au revêtement du noyau dopé en ajoutant à une dispersion aqueuse et/ou alcoolique, qui contient 1 à 60 % en poids, par rapport à la dispersion, d'un noyau dopé fabriqué dans la première étape du procédé, une solution ou une suspension qui contient 0,001 à 75 % en poids, par rapport au noyau dopé, d'un sel de métal ou de métalloïde, on sèche le mélange réactionnel et, éventuellement, on le calcine, ou
- on pulvérise le noyau dopé dans un récipient de mélange approprié, tout en mélangeant de manière intensive, éventuellement, d'abord avec un liquide aqueux, puis avec une solution ou une dispersion aqueuse d'un sel de métal ou de métalloïde, on poursuit, éventuellement, le malaxage du mélange réactionnel et on procède à un traitement thermique à une température de 100 à 900 °C sur une période de temps de 1 min à 8 heures.

11. Utilisation de la particule d'oxyde selon les revendications 1 à 9, comme agent de polissage dans le polissage chimico-mécanique de substrats semiconducteurs et de couches appliquées sur ces derniers.

12. Utilisation de la particule d'oxyde selon les revendications 1 à 9, comme charge, dans le but de régler la rhéologie de systèmes liquides, comme matériau de support, comme substance active sur le plan catalytique, comme matériau de départ pour la fabrication de dispersions, comme substance de base céramique, dans l'industrie électronique, dans l'industrie des cosmétiques, comme matériau absorbant, comme additif dans l'industrie de la silicone et du caoutchouc, pour la stabilisation de protections thermiques, comme matériau isolant, comme adjuvant d'écoulement, comme matériau de colmatage dans l'industrie dentaire, comme produit auxiliaire dans l'industrie pharmaceutique, dans l'industrie des peintures et des vernis, dans les applications de films de PET, dans les poudres de toner, comme agent antirouille, dans les encres, dans les séparateurs de batterie.
